# EUROPÄISCHE PATENTSCHRIFT

(11) **EP 1 480 018 B1**
(45) Veröffentlichungstag und Bekanntmachung des Hinweises auf die Patenterteilung: **22.06.2016**
(21) Anmeldenummer: 04010508.2
(22) Anmeldetag: 04.05.2004
(51) Int. Cl.: G01F 1/28, G01F 15/12

(54) **Durchflussmengenmesser mit einem Sieb, insbesondere für Warmwasserheizungsanlagen**
Flowmeter with a filter, especially for hot water heating apparatus
Débitmètre comprenant un filtre, en particulier pour les installations de chauffage

(30) Priorität: 22.05.2003 DE 20307977 U
(43) Veröffentlichungstag der Anmeldung: 24.11.2004
(73) Patentinhaber: Watts Industries Deutschland Gesellschaft mit beschränkter Haftung, 76829 Landau (DE)
(72) Erfinder: Schehl, Ulrich, 76855 Annweiler am Trifels (DE)
(74) Vertreter: Patentanwälte Dr. Keller, Schwertfeger

(56) Entgegenhaltungen:
- EP-A- 0 797 080
- EP-A- 0 949 484
- US-A- 1 173 395

## Beschreibung

Die Erfindung betrifft einen Durchflussmengenmesser, insbesondere für Warmwasserheizungsanlagen, gemäß dem Oberbegriff des Patentanspruchs 1.

Durchflussmengenmesser dieser Art für strömende Flüssigkeiten sind allgemein bekannt. Sie werden häufig in Warmwasserheizungsanlagen eingesetzt, um die Teilströme des Heizmediums in den verschiedenen Leitungssträngen bzw. Zweigleitungen anzuzeigen und während des Betriebs überwachen zu können. Durchflussmengenmesser dieser Art besitzen eine Anzeigeskala, an der die jeweilige Stellung einer Anzeigestange mit einem durch das strömende Medium beeinflussten Prallteller ablesbar ist; diese ist bei bekannten Ausführungen meist auf der Oberfläche des Schauglases entlang einer Linie angeordnet.

Bei einem bekannten Durchflussmengenmesser dieser Art sind sowohl das Anzeigeteil als auch das Messteil mit zylindrischen Ansatzteilen einander gegenüberliegend in ein Sammelrohr eingeschraubt, wobei sich zwischen dem unteren Ende des Anzeigeteils und dem oberen Ende des Messteils ein Zwischenraum befindet (EP 0 884 514 B1).

Wird ein solcher Durchflussmengenmesser nicht, wie dort angegeben, im Rücklauf eingesetzt, wo der in der Innenbohrung des Messteils bewegbare Prallteller der Anzeigestange unmittelbar angeströmt wird, sondern im Vorlauf, dann muss, um Turbulenzen bei der Anströmung des Pralltellers zu vermeiden, die Anströmung des Pralltellers beeinflusst werden. Dies gelingt zum Beispiel dadurch, dass in dem Bereich zwischen dem unteren Ende des Anzeigeteils und dem oberen Ende des Messteils ein rohrförmiges Ansatzteil.angeordnet wird, das diesen Zwischenraum weitgehend überbrückt und mit die Durchströmung beeinflussenden Durchbrechungen versehen ist. Eine solche Konstruktion zeigt die EP 0 797 080 A2.

In der Praxis hat sich gezeigt, dass in Warmwasserheizungsanlagen, insbesondere nach der Aufnahme des Betriebs oder auch nach Arbeiten an der Anlage, oft kantige Schmutzpartikel mit dem Heizmedium transportiert werden. Da der Ringspalt zwischen dem Außenumfang des Pralltellers und der Innenbohrung des Messteils aus strömungstechnischen Gründen sehr eng ist, besteht die Gefahr, dass sich solche Schmutzpartikel in diesem Ringspalt verklemmen können und die Funktion der Anzeige blockieren.

Ein weiterer Durchflussmengenmesser ist bekannt aus der US 1 173 395, die bereits im Jahr 1916 erschienen ist. Bei dieser Konstruktion befindet sich die Prallplatte einer federbelasteten Anzeigestange in einem Zylinder, in dessen Wand wendelförmig angeordnete Reihen von Lochungen mit ansteigendem Durchmesser vorgesehen sind. Als Zylinderboden wirkt ein als Sieb dienendes Drahtgitter. Bei dieser Konstruktion strömt das Messmedium über eine als axiale Verlängerung des Zylinders ausgebildete Führung axial zu, wodurch die Gesamtlänge entsprechend groß wird.

Schließlich zeigt auch die EP 0 949 484 A1 ein Durchflussmessgerät für Fluide, dessen Gehäuse eine axiale Zuflussöffnung und eine axiale Abflussöffnung besitzt. Im Inneren des Gehäuses ist hinter der Zuflussöffnung ein vom Fluid beaufschlagter Messkörper angeordnet. Zwischen Zuflussöffnung und Messkörper befindet sich ein planes Sieb, welches den groben Schmutz abhält. Auch bei diesem Gerät strömt das Messmedium axial zu, wodurch das Gehäuse entsprechend lang wird.

Hier ist bei den bekannten Durchflussmengenmessern mit axial angeordnetem Sieb nachteilig die große Baulänge der Armatur, was solche Konstruktionen insbesondere für moderne Warmwasserheizungsanlagen nicht praktikabel erscheinen lässt. Ein weiterer Nachteil sind die planen Siebe, die separat hergestellt und nachträglich mit dem Gehäuse bzw. der Zylinderwand verbunden werden müssen. Auch sind diese Siebe bei Bedarf nicht auswechselbar.

Vor diesem Hintergrund liegt der Erfindung die Aufgabe zugrunde, eine Möglichkeit zu finden, um eine Beeinträchtigung des Messvorgangs durch solche Schmutzpartikel zu vermeiden, ohne die Gleichmäßigkeit der Anströmung des Pralltellers zu beeinträchtigen.

Gemäß der Erfindung wird diese Aufgabe durch einen Durchflussmengemesser mit den Merkmalen des Patentanspruchs 1 gelöst.

Vorteilhafte Weiterbildungen ergeben sich aus den Unteransprüchen.

Der Erfindung liegt der Gedanke zugrunde, dem Prallteller in der Durchströmrichtung des Heizmediums ein Sieb vorzuschalten, welches in der Lage ist, solche Schmutzpartikel, welche die Funktion der Anzeige beeinträchtigen könnten, zurückzuhalten. Zweckmäßig ist es dabei, dieses Sieb in der Außenwand des zylindrischen, den zylindrischen Teil des Grundkörpers des Anzeigeteils in Richtung auf das Messteil fortsetzenden Ansatzteils auszubilden, und zwar zweckmäßigerweise in Form von Längsschlitzen.

Als besonders vorteilhaft hat sich herausgestellt, dieses Ansatzteil als Einsatzteil, insbesondere aus Kunststoff auszubilden, das durch Einstecken in der Innenbohrung des zylindrischen Teils des Grundkörpers befestigt und gegebenenfalls getauscht werden kann.

Die Erfindung wird nachstehend anhand der Zeichnung näher erläutert. Es zeigt
- Fig. 1: eine teilweise geschnittene Seitenansicht eines an einem Sammelrohr montierten Durchflussmengenmessers gemäß der Erfindung.
- Fig. 2: einen Querschnitt durch das Ansatzteil entlang der Linie II-II in Fig. 1 und
- Fig. 3a - d: verschiedene Darstellungen des Grundkörpers des Anzeigeteils.

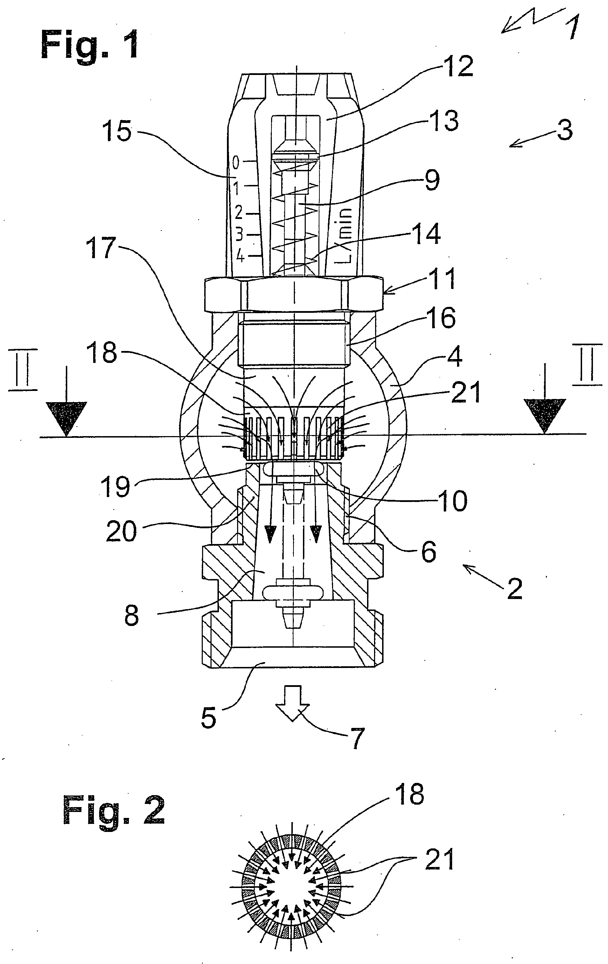

Der in Fig. 1 als Beispiel dargestellte Durchflussmengenmesser 1, bestehend aus Messteil 2 und Anzeigeteil 3, ist an einem Vorlaufverteilerrohr 4 einer Warmwasserheizungsanlage montiert und misst die Strömung gemäß Pfeilrichtung im Vorlauf einer einzelnen Zweigleitung 5. Üblicherweise sind auf dem Verteilerrohr 4 mehrere solcher Durchflussmengenmesser für verschiedene Zweigleitungen nebeneinander angeordnet.

Der mittels eines Außengewindes 6 in das Verteilerrohr 4 dicht eingeschraubte Messteil 2 weist für den Anschluss eine nicht eigens dargestellte, nur durch einen die Strömungsrichtung symbolisierenden Pfeil 7 angedeutete Zweigleitung 5 auf. In an sich bekannter Weise befindet sich in der Messbohrung 8 des Messteils 2, die zur Zweigleitung 5 hin konisch erweitert ist, ein von einer Anzeigestange 9 getragener Prallteller 10, dessen Stellung entlang der Messbohrung 8 vom jeweiligen Durchfluss abhängt.

Der Anzeigeteil 3 ist gegenüber dem Messteil 2 oben auf dem Verteilerrohr 4 montiert. Er weist einen ebenfalls mit dem Verteilerrohr 4 dicht verschraubten Grundkörper 11 auf, der ein rohrförmiges, aus transparentem Material gefertigtes Schauglas 12 trägt. Die Anzeigestange 9 ist in dem Anzeigeteil 3 längsbeweglich geführt; sie trägt nahe ihrem oberen Ende einen scheibenförmigen Zeiger 13, der sich entsprechend der Stellung des Pralltellers 10 in der Bohrung des Schauglases 12 auf- und abbewegt. Gegenüber dem Grund der Bohrung des Schauglases 12 und dem Zeiger 13 bzw. der Anzeigestange 9 ist eine Druckfeder 14 abgestützt. Die Skala zum Ablesen der jeweiligen Durchflussmenge befindet sich an einem hülsenförmigen Skalenträger 15, der das Schauglas 12 umgibt. Der grundsätzliche Aufbau und die Funktionsweise eines derartigen Durchflussmengenmessers sind insoweit bekannt und brauchen nicht weiter beschrieben zu werden.

Wie in Fig. 1 erkennbar, setzt sich der Grundkörper 11 des Anzeigeteils 3, der mittels eines Außengewindes 16 in das Verteilerrohr 4 eingeschraubt ist, innerhalb des Querschnitts des Verteilerrohrs 4 in einen zylindrischen Ansatzteil 17 fort. Dieser weist eine Innenbohrung auf, in der die Anzeigestange 9 längsbeweglich ist. Gemäß der Erfindung ist der untere Teil 18 dieses zylindrischen Ansatzteils 17, der zum oberen stirnseitigen Rand 19 des in das Sammelrohr 4 hineinragenden Rohrstutzens 20 des Messteils 2 ein geringes Spiel aufweist, als Sieb ausgebildet. Im dargestellten Ausführungsbeispiel besteht dieses Sieb aus einer Anzahl von zur Achse des Durchflussmengenmessers parallelen Schlitzen 21, die in gleichmäßigen Abständen über den Umfang des Ansatzteils 18 verteilt sind.

Die Teilung der Längsschlitze 21 und die hierdurch bewirkte Durchströmung des Teils 18 zeigt Fig. 2 in einem Querschnitt durch dieses Teil entlang der Linie II-II in Fig. 1. Hieraus ist auch erkennbar, dass die Breite der Längsschlitze in Durchströmrichtung, also von außen nach innen zunimmt, um die Siebwirkung zu verstärken und ein Verklemmen etwa eingedrungener Schmutzpartikel zu verhindern. Die Abmessungen der Längsschlitze betragen zweckmäßig etwa 0,8 x 6,0 mm, so dass allenfalls Partikel mit Abmessungen <0,8 mm in die Messzone eindringen können, was die Gefahr der Blockierung der Anzeigestange erheblich reduziert.

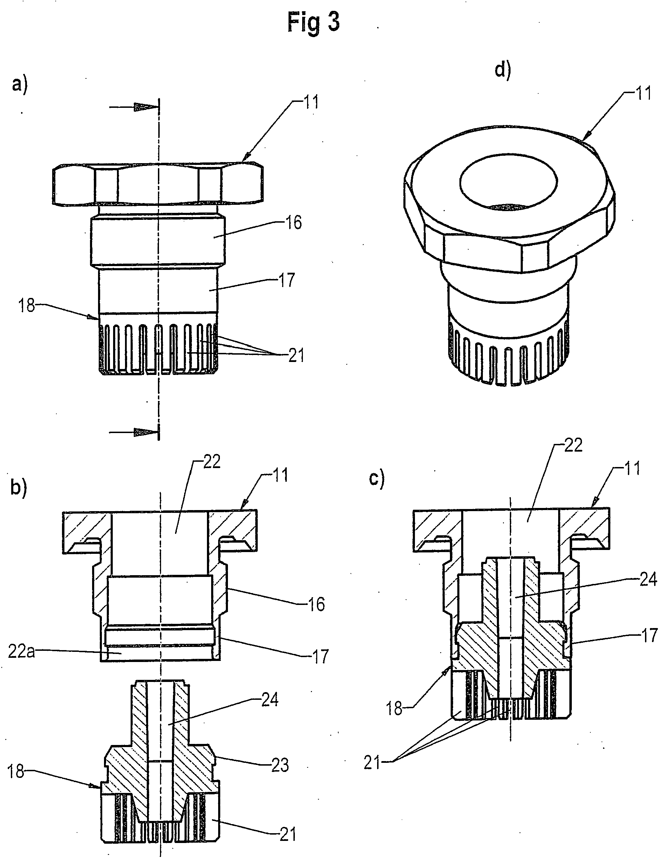

In Fig. 3 ist der Grundkörper 11 des Anzeigeteils 3 in mehreren unterschiedlichen Darstellungen gezeigt. Während Fig. 3a den Grundkörper 11 - ähnlich wie Fig. 1 - in Ansicht zeigt und Fig. 3d in Schrägansicht, kann anhand der Fig. 3b und 3c das Einsetzen eines Siebteils in den Grundkörper erläutert werden.

Zweckmäßig ist nämlich das untere zylindrische Ansatzteil 18 mit den Längsschlitzen 21 als Einsatzteil ausgebildet, das von unten her in die Innenbohrung 22 des zylindrischen Ansatzteils 17 des Grundkörpers 11 eingesteckt werden kann. Dieses Einsatzteil 18 kann dann auch aus anderem Material bestehen als der Grundkörper 11, beispielsweise aus Kunststoff mit einer entsprechenden Festigkeit. Das Einsatzteil 18 kann dann an seinem Außenumfang einen Ringwulst 23 oder einander gegenüberliegende Nasen besitzen, die beim Einsetzen in den unteren Bereich 22a der Innenbohrung 22 unter Verformung in eine Nut einrasten und dadurch den festen Sitz sichern. Auch andere Befestigungsmöglichkeiten sind denkbar, zum Beispiel Einschrauben.

In diesem Einsatzteil 18 kann auch die Führung für die Anzeigestange 9 ausgebildet sein, nämlich in einer zentralen Bohrung 24. Dies ist unter anderem aus montagetechnischen Gründen sinnvoll, um den gesamten Anzeigeteil 3 gewissermaßen von unten her dadurch zusammenstellen zu können, dass in die Innenbohrung 22 des zylindrischen Teils 17 zunächst das Schauglas 12 mit einer entsprechenden O-Ring-Dichtung eingeschoben und durch Einstecken des Einsatzteils 18 mit der Anzeigestange 9 und dem Prallteller 10 in seiner Lage fixiert wird.

Strömungstechnisch gesehen hat die Ausbildung des dem Prallteller vorgeschalteten Siebes in Form von Längsschlitzen 21 den Vorteil, dass die Strömung in einzelne Stromfäden zerlegt wird und so die turbulente Strömung glättet, so dass die Anzeige ruhiger und damit genauer wird. Das Sieb wirkt sich damit auch geräuschmindernd aus.

## Patentansprüche

1. Durchflussmengenmesser, insbesondere für Warmwasserheizungsanlagen, mit einem Messteil (2) und einem Anzeigeteil (3), wobei das Anzeigeteil (3) einen Grundkörper (11) mit einem in ein Sammelrohr (4) hineinragenden zylindrischen Teil umfasst, in dem eine in das Messteil (2) hineinragende Anzeigestange (9) mit Prallteller (10) in Längsrichtung des Anzeigeteils (3) beweglich ist, wobei dem Prallteller in Durchströmrichtung des Heizmediums ein Sieb vorgeschaltet ist, wobei sich der Grundkörper (11) in ein die Anströmung des Pralltellers (10) beeinflussendes zylindrisches Ansatzteil (17) fortsetzt, dessen unterer Teil (18) das Sieb aufweist, wobei die zylindrische Außenwand des unteren Teils (18) des Ansatzteils (17) eine Anzahl von zur Achse des Durchflussmengenmessers parallelen, gleichmäßig über den Umfang verteilten Schlitzen (21) aufweist, die das Sieb bilden, und dass der untere Teil (18) des Ansatzteils (17) als Einsatzteil ausgebildet und durch Einstecken in das zylindrische Ansatzteil (17) mit diesem verbindbar ist, **dadurch gekennzeichnet, dass** die Breite der Schlitze (21) in Durchströmrichtung des Heizmediums von außen nach innen zunimmt.

2. Durchflussmengenmesser nach Anspruch 1, **dadurch gekennzeichnet, dass** die Schlitze (21) auf der Eintrittsseite des Heizmediums in die Schlitze eine Breite von 0,5 bis 1,0 mm, vorzugsweise von ca. 0,8 mm aufweisen.

3. Durchflussmengenmesser nach einem der Ansprüche 1 oder 2, **dadurch gekennzeichnet, dass** die Anzeigestange (9) in dem Einsatzteil (18) längsbeweglich geführt ist.

4. Durchflussmengenmesser nach einem der Ansprüche 1 bis 3, **dadurch gekennzeichnet, dass** das Einsatzteil (18) aus Kunststoff besteht.

## Claims

1. Flow meter, in particular for hot water heating systems, comprising a measuring part (2) and an indicator part (3), the indicator part (3) comprising a main body (11) having a cylindrical part which protrudes into a collecting pipe (4) and in which an indicator rod (9) that protrudes into the measuring part (2) and has a rebounding plate (10) can move in the longitudinal direction of the indicator part (3), a filter being connected upstream of the rebounding plate in the flow direction of the heating medium, the main body (11) extending into a cylindrical attachment part (17) that influences the flow against the rebounding plate (10), the lower part (18) of which attachment part comprises the filter, the cylindrical outer wall of the lower part (18) of the attachment part (17) comprising a number of slits (21) that are regularly distributed over the circumference and are parallel to the axis of the flow meter, which slits form the filter, and the lower part (18) of the attachment part (17) being formed as an insert and it being possible to connect said lower part to the cylindrical attachment (17) part by inserting it therein, **characterised in that** the width of the slits (21) increases from the outside inwards in the flow direction of the heating medium.

2. Flow meter according to claim 1, **characterised in that**, on the side where the heating medium enters the slits, the slits (21) have a width of from 0.5 to 1.0 mm, preferably of approximately 0.8 mm.

3. Flow meter according to either claim 1 or claim 2, **characterised in that** the indicator rod (9) is guided in a longitudinally movable manner in the insert (18).

4. Flow meter according to any of claims 1 to 3, **characterised in that** the insert (18) consists of plastics material.

## Revendications

1. Débitmètre, en particulier pour les installations de chauffage à eau chaude, comportant une partie de mesure (2) et une partie d'affichage (3), la partie d'affichage (3) comprenant un corps de base (11) avec une partie cylindrique pénétrant dans un tube collecteur (4), dans laquelle une tige indicatrice (9) avec plaque d'impact (10) pénétrant dans la partie de mesure (2) peut coulisser dans la direction longitudinale de la partie d'affichage (3), un tamis étant placé en amont de la plaque d'impact (10) dans le sens d'écoulement du milieu de chauffage, le corps de base (11) se prolongeant par un appendice cylindrique (17) qui influence l'écoulement sur la plaque d'impact (10) et dont la partie inférieure (18) présente le tamis, la paroi extérieure cylindrique de la partie inférieure (18) de l'appendice (17) présentant une pluralité de fentes (21) parallèles à l'axe du débitmètre, réparties uniformément sur la circonférence, qui forment le tamis, et la partie inférieure (18) de l'appendice (17) étant conçue sous la forme d'un insert et pouvant être reliée à l'appendice cylindrique (17) par insertion dans celui-ci, **caractérisé en ce que** la largeur des fentes (21) augmente de l'extérieur vers l'intérieur dans le sens d'écoulement du milieu de chauffage.

2. Débitmètre selon la revendication 1, **caractérisé en ce que** les fentes (21) présentent, du côté de l'entrée du milieu de chauffage dans les fentes, une largeur de 0,5 à 1,0 mm, de préférence d'environ 0,8 mm.

3. Débitmètre selon l'une des revendications 1 ou 2, **caractérisé en ce que** la tige indicatrice (9) est guidée coulissante longitudinalement dans l'insert (18).

4. Débitmètre selon l'une des revendications 1 à 3, **caractérisé en ce que** l'insert (18) est réalisé en matière plastique.
